# EUROPEAN PATENT APPLICATION

(11) **EP 0 674 288 A1**
(43) Date of publication of application: **27.09.1995**
(21) Application number: 95301757.1
(22) Date of filing: 16.03.1995
(51) Int. Cl.: G06K 11/18

(54) **Multidimensional mouse**

(30) Priority: 24.03.1994 US 217333
(71) Applicant: AT&T Corp., New York, NY 10013-2412 (US)
(72) Inventor: Boie, Robert Albert, Westfield, New Jersey 07090 (US); Ruedisueli, Laurence W., Berkeley Heights, New Jersey 07922 (US); Wagner, Richard Eric, South Plainfield, New Jersey 07080 (US)
(74) Representative: Buckley, Christopher Simon Thirsk

(57) **Abstract**

Simultaneous control of two coordinate systems or applications program screen areas is effected by moving a mouse body on a work surface to control one coordinate system (cursor 321) or screen area while independently operating a thumb actuated input device on the mouse body to control another coordinate system (cursor 311) or screen area. The mouse housing is designed to facilitate control of each coordinate system (311,321) without affecting control of the other system.

## Description

### FIELD OF THE INVENTION

This invention relates to computer operator interface devices used for graphical data input and on-screen cursor control in applications Programs. More particularly, the invention relates to both an improved multidimensional electronic mouse and the use of such a mouse in conjunction with menu operated software.

### BACKGROUND OF THE INVENTION

In the field of cursor control and graphical data input devices, electronic mice have emerged as the most commonly used technology. A typical electronic mouse senses the operator's movement of the mouse in two dimensions on a work surface such as a desk. A spherical member protruding from the bottom surface of the mouse is allowed to roll on the work surface as the mouse is moved. The rolling motion of the sphere turns two rollers that contact the sphere at orthogonal equators. The rollers are on shafts having rotary optical sensors. Information from the optical sensors thereby measures movement of the mouse on the work surface and controls the position of computer screen attributes such as a cursor, a drawing tool or a menu selection.

In another system, an optical sensor in a mouse is used to sense the presence or absence of evenly spaced lines printed on the work surface. By counting the passage of these lines as the mouse is moved, displacement of the mouse can be calculated.

As an alternative to these relative positioning systems, special tablets are used with electronic mice to create an absolute coordinate system. Such tablets are commonly used in conjunction with a pen stylus, but are equally applicable to tracking the position of a mouse containing an appropriate stylus. One approach is to introduce a current through the mouse stylus to a uniformly resistive tablet and measure the current at conductive strips of fixed potential at the edges of the tablet. Stylus location is thereby determined by the relative division of the current among the strips.

An optical mouse location device is described in U.S. Patent No. 4,814,553. In this system, linear imaging arrays are mounted in the mouse to detect a pattern of lines on the tablet designed to be unique for each position of the mouse on the tablet.

A capacitive system is disclosed in U.S. Patent 5,113,041. In this system, a series of equally spaced x-conductive strips and a similar series of y-conductive strips are separated by a thin layer of insulating material and covered by another layer of insulating material. The capacitance between each strip and the stylus is measured. By calculating the centroid of the individual stylus-to-strip capacitances, the x and y coordinates of the stylus are found.

Determining the location of a mouse using one of the tablet systems described above has the advantage of measuring the mouse coordinates with absolute reference to the work surface. In contrast, a rolling sphere sensor loses its reference to the work surface when an operator picks the mouse up and moves it to a new location.

In addition to having a sensor for measuring the two dimensional position of the mouse on the work surface, a mouse typically has at least one button to be used in conjunction with the mouse's positioning capability, for example in triggering an application program to record a cursor position. More typically, a mouse is equipped with a plurality of such buttons. These buttons are assigned specific functions in the applications program. Although it is possible to place many such buttons on a mouse, an operator often has trouble remembering a large number of assigned functions. Most commercially available mice therefore have three buttons or less.

In certain applications, it is advantageous to measure the orientation angle, or yaw angle, of the mouse with respect to its x-y coordinate system. Yaw measurement requires an additional mouse position sensor. An example of such a mouse is described in IBM Technical Disclosure Bulletin Vol. 27 no. 6 (Nov. 1984) at 3423, which discloses the addition of another rolling ball with an associated sensor. The yaw angle of the mouse is calculated using the additional sensor data.

Another system for measuring mouse yaw is disclosed in U.S. Patent No. 5,113,041. This mouse is used in conjunction with a tablet as described above. Yaw angle is calculated from the coordinates of three stylus tips.

A trackball is an alternative to the mouse-style input device and has had some success in the market. The trackball, which has been described as an inverted mouse, comprises a spherical two-dimensional position sensor similar to that used in a mouse. The sphere protrudes from the top of a housing, and is rotated directly by an operator's fingers. Rollers coupled with optical sensors, similar to those used in a mouse, measure the rolling motion of the trackball.

An alternative to the trackball device is a tiled surface stroke sensor, described in U.S. Patent Application No. 08/011040 filed January 29, 1993 and assigned to the assignee of the present invention. In this device, a thin, planar capacitive proximity sensor comprising a plurality of electrode array tiles measures the absolute position of a finger on a surface. The location of the finger is determined by calculating the centroid of the capacitances of the several electrode array tiles affected by the proximity of the finger. The response of a screen cursor to stroking this array with a finger can be made to emulate the response to comparable stroking of a trackball.

A mouse has also been configured to enhance on-screen cursor control. U.S. Patent No. 4,891,632 discloses a mouse with a first rolling spherical member as described above for sensing the location of the mouse unit on a work surface. An additional rolling spherical member protrudes from a side portion of the mouse housing in the manner of a trackball to be rolled by the user's thumb in order to make fine adjustments to the positional information from the first rolling spherical member.

The functions performed by an operator using a mouse or other graphical input device can be divided into two categories: "work area" functions and program control functions. Work area functions include the substantive operations performed on the subject data, such as delineating text in a word processing program, delineating cells in a spreadsheet, or creating an element in the drawing area of a computer aided drafting (CAD) program. These functions are typically performed in a large work area located in the center portion of a computer screen.

Program control functions permit the operator to select alternative menu items to control the flow of an applications program. For example, an operator in a word processing program may select a font in which a delineated portion of text is to be printed, or a CAD operator may select a line thickness in which to display selected elements in a drawing. For organizational and aesthetic purposes, an applications program typically displays menu selections on the top, side and bottom edges of the screen, leaving a central portion of the screen to be used as the work area.

Often, in order to execute a task in an applications program, an operator must perform both work area functions and program control functions. For example, in order to move a portion of text within a document in a word processing program, an operator must first delineate the text to be moved by moving the cursor to the beginning and ending locations of the text using mouse movement, and indicate those positions with the mouse buttons. The operator then uses the mouse to move the cursor to the menu area on the border of the screen and to select the command indicating that the text is to be moved. This command is often called a "cut" command in analogy to a "cut and paste" editing process. The mouse is then used to return the cursor to the text area where the target location for the "cut" text is indicated by again pushing a mouse button. Finally, the cursor is returned to the menu area of the screen where the "paste" command is selected, completing the process.

Many word processing programs contain keyboard commands for such operations, but the operator is then burdened with memorizing these keystrokes. Furthermore, the use of keystrokes in conjunction with a mouse requires switching back and forth from the keyboard to the mouse, negating ergonomic advantages gained from the use of a mouse.

Using a standard mouse to perform both work area functions and program control functions requires that the operator alternate between using the mouse to make finely positioned selections in the text or menu areas, followed by using the mouse to make long moves on the screen between the two areas. This procedure is physically tiring to the operator who must frequently use the arm to move the mouse relatively large distances on the work surface. Furthermore, the operator's "place" is lost in each screen area each time the operator is forced to move the cursor to a different screen area.

In many applications, especially drawing programs, the standard mouse is limited in that only two dimensions are available at a time. Additional dimensions in a drawing must be controlled two-at-a-time using icon or keyboard control to select the desired pair of axes to be represented by the mouse work surface. Proposed solutions to this problem include fitting a hand with x, y, z, yaw, pitch and roll sensors. While such a solution is appropriate for the relatively coarse requirements of casually viewing a room in a virtual house, such an arrangement performs poorly in a CAD application where fine and independent controls of all axes are needed. Such "hand waving" control is also tiring.

### SUMMARY OF THE INVENTION

The present invention provides a convenient method for accessing menu selections in an applications program screen without disturbing the cursor location in the work area of the screen. This is done by uncoupling control of the work area cursor from control of the menu selection cursor.

The invention furthermore provides additional dimensions of cursor control in a mouse without cluttering the mouse with additional buttons or other devices.

One aspect of the present invention relates to the use of a supplementary two-dimensional sensor installed on a mouse such that it can be used independently of the mouse position sensor in order to control menu selections in an applications program.

In one embodiment, a trackball is positioned on the mouse so that it can be operated with the thumb. An operator uses this trackball to make menu selections independently of the position of the cursor in the work area, which is controlled by the movement of the mouse. The mouse in this embodiment is shaped so as to optimize independent control of thumb and arm movement. In another embodiment, the trackball is replaced by a stroke sensor.

Another aspect of the invention relates to a five dimensional mouse for use in drawing applications whereby control of the five dimensions is intuitive and comes naturally to the operator. In this aspect of the invention, dimensions controlled by movement of the mouse may be decoupled from dimensions controlled by the thumb.

### BRIEF DESCRIPTION OF THE DRAWINGS

Fig. 1 is a schematic view of a computer system incorporating a mouse according to the present invention.

Fig. 2 is a schematic view of a hand operated electronic mouse with two position sensors according to the present invention, showing the geometric calculations for determining position and yaw.

Fig. 3 is a perspective view of an ergonomic electronic mouse with a thumb-actuated, two dimensional trackball, according to the present invention.

Fig. 4 is a schematic diagram showing control of a graphical menu-driven program using a five-dimensional mouse, according to the present invention.

### DETAILED DESCRIPTION OF THE INVENTION

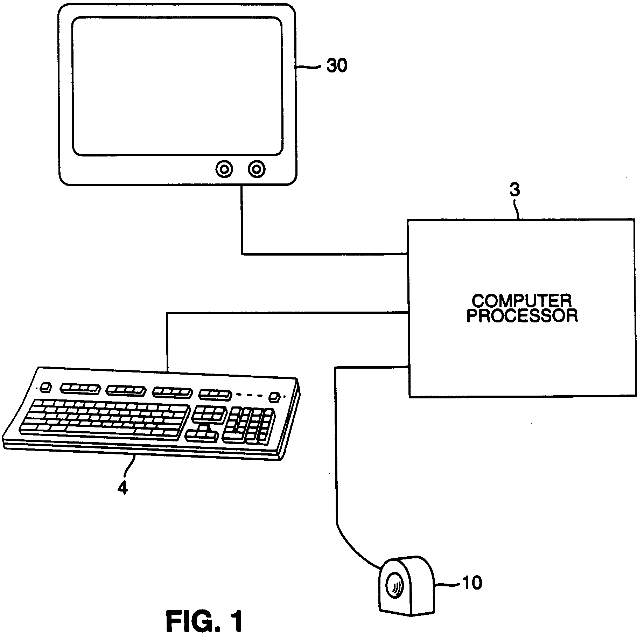

Fig. 1 shows a computer system incorporating a mouse 10 according to the present invention. The computer system comprises a computer processor 3, a keyboard 4, a screen display 30, and a mouse 10. Information from the mouse 10 is interpreted by processor 3 to control attributes of the display screen 30 such as cursor location.

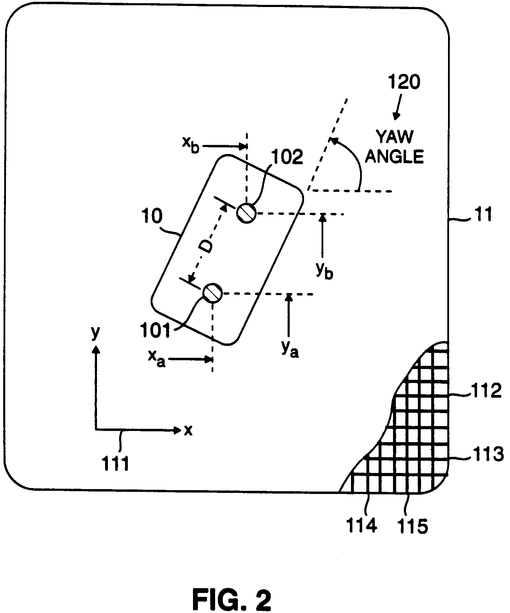

Fig. 2 shows a hand operated mouse 10 according to the present invention containing two position sensors comprising capacitive electrodes 101 and 102. The position sensors can alternatively be spherical rolling members, optical sensors, or other appropriate devices for measuring the x-y coordinates of the mouse in a reference plane. While these examples are presented to illustrate practical embodiments of the invention, those skilled in the art will readily appreciate that other sensing devices could be employed to determine the x-y coordinates of the mouse in a reference plane.

The sensors 101 and 102 are mounted to the bottom surface of a mouse housing and are spaced apart a measured distance "D". In this preferred embodiment in which the sensors measure absolute position on a tablet 11, the first sensor measures the coordinates at its location xₐ, yₐ. The second sensor measures location coordinates x_{b}, y_{b}. The x-y coordinates of the mouse with respect to a tablet coordinate system 111 can be calculated by averaging the coordinate outputs of the sensors: x = (xₐ + x_{b})/2, and y = (yₐ + y_{b})/2.

The yaw angle 120 of the mouse 10 with respect to the tablet coordinate system 111 can be calculated using the known distance "D" between sensors: yaw angle = sin⁻¹((x_{b}-xₐ)/D).

In an embodiment of the invention where only a single mouse position sensor is used, sensor location coordinates xₐ, yₐ are used directly as the x-y coordinates of the mouse in the tablet coordinate system. Yaw angle is not available in this embodiment.

The presently preferred embodiment of the invention illustrated in Fig. 2 shows the mouse 10 resting on the tablet 11 with an array of tablet electrodes including electrodes 112, 113, 114 and 115. The two mouse position electrodes 101 and 102 are embedded in a bottom surface (not shown) of the mouse 10. Each electrode is of circular cross section and is approximately 1mm in diameter.

The array of tablet electrodes is embedded under the surface of the tablet 11 upon which the mouse travels, such that capacitance between the mouse electrodes 101 and 102 and the tablet electrodes 112, 113, 114 and 115 can be sampled. The tablet electrodes comprise a set of equal dimension and equally spaced x conductive strip structures, including electrodes 114 and 115, and a similar set of y conductive strip structures, including electrodes 112 and 113. The x and y strip structures are separated from each other by a thin layer of insulating material (not shown). A second layer of insulating material (not shown) separates the strip structures from the surface. A capacitance value is measured between each strip structure and the mouse electrodes, and from this information the centroid of the mouse electrodes with respect to the tablet can be calculated. A capacitive tablet system is disclosed in U.S. Patent No. 5,113,041, which is incorporated herein by reference.

The use of a tablet-oriented absolute positioning system is preferred over the use of rolling spherical members because of the potential for dirt to build up on a sphere and its associated rollers, causing the spherical sensor to slip. Some slippage is tolerable in a two dimensional mouse because it is relatively easy to compensate for the slippage by moving the mouse farther on the work surface. Such slippage in a mouse with yaw sensing is considerably less tolerable because, in addition to slowing the x and y motion of the cursor, the slippage introduces an undesirable rotation of the yaw angle.

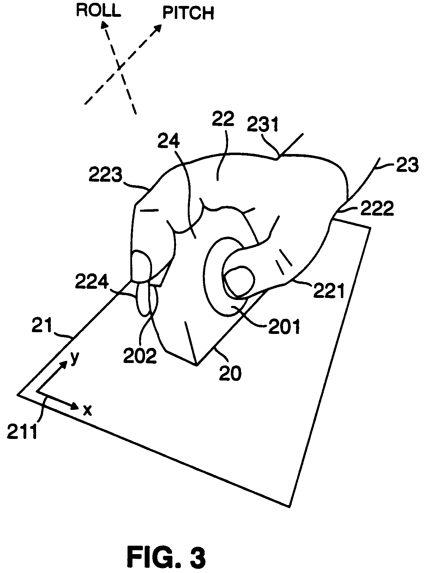

Fig. 3 illustrates a mouse having a housing 20 moving on a surface 21 with an additional, thumb operated two dimensional position sensor 201. In this example, the sensor 201 is a trackball; however, one skilled in the art will readily appreciate that other sensing devices could be employed to relate thumb movement to x-y coordinates.

The trackball 201 is located in a position such that the thumb 221 naturally contacts the trackball when the hand 22 is grasping the mouse housing 20. While the hand moves the mouse housing, the thumb 221 is free to stroke the trackball 201. Thus, manipulation of the two dimensions controlled by the trackball 201 is decoupled from manipulation of the dimensions controlled by movement of the bottom surface of the mouse housing 20 which incorporates position sensors, such as electrodes 101 and 102 of Fig. 2.

This configuration utilizes the advantages of both the mouse housing and the trackball to control two sets of coordinates, without coupling control of one set to the other. In the mouse coordinate system, motions of the arm 23 provide large displacements of the mouse housing 20 while the hand's heel 222 naturally plants for fine positioning using the wrist 231. In the trackball coordinate system, the thumb 221 is free to control motion separately from and simultaneously to arm 23 and wrist 231 motions used to control the mouse housing. Thus, independent manipulation of the two coordinate systems has been found to come naturally and intuitively to an operator.

The mouse housing 20 incorporates a stand-up shape with a rounded top 24 to allow the thumb to control the trackball 201. Independent manipulation of the trackball and the mouse housing is enhanced by the position of the hand 22 when grasping the mouse housing. The mouse housing of the present invention is configured so that the operator's hand is angled with respect to the work surface 21, with the index finger side of the palm raised and the little finger side of the palm closest to the work surface. The rounded top 24 conforms to the natural arch of the relaxed index and middle fingers 223 and 224 in grasping the mouse housing. This orientation of the hand has been found to best permit the operator to move the trackball without moving the mouse housing, and vice versa. This furthermore reduces operator fatigue in that the hand is in a more natural position for manipulation of the thumb.

The lower links of the index finger 223, the second finger 224 and the ring finger (not shown), as well as the base of the thumb, are used to grasp the mouse housing 20. A button 202 is provided under the tip of the index finger to perform program assignable functions. An additional button not illustrated in this view is optionally located under the tip of the second finger 224.

In combination with the mouse position sensors, such as sensors 101 and 102 in the bottom surface of the mouse housing 20, the described mouse with thumb operated trackball 201 can simultaneously control five dimensions by advantageously dividing single hand control between the arm, which controls mouse position coordinates 211, the wrist, which controls mouse yaw 120, and the thumb, which controls the trackball coordinates, for example roll and pitch 203. The tip of the index finger 223 remains free to actuate button 202, and the second finger 224 is similarly available. The two axis pairs 211 and 203 are effectively decoupled by this division of control among different parts of the body.

An alternative embodiment of the mouse uses a tiled stroke sensing surface (not shown) to replace the thumb-actuated trackball 201. The advantageous stand-up shape previously described is preferably incorporated in this embodiment as well, but other suitable ergonomic shapes might also be employed. As the thumb is moved over the tiled surface, a centroid of the capacitances between each of the affected tiles and the thumb is calculated in order to determine the thumb position. A tiled stroke sensing surface is described in U.S. Patent Application No. 08/011040 filed January 29, 1993, which is hereby incorporated by reference.

Changes in the location of the thumb centroid on the stroke sensing surface are processed to produce an output emulating the operation of a trackball with the thumb. In one embodiment of the invention, a rapid stroke across the stroke sensing surface produces a one half screen motion of the cursor.

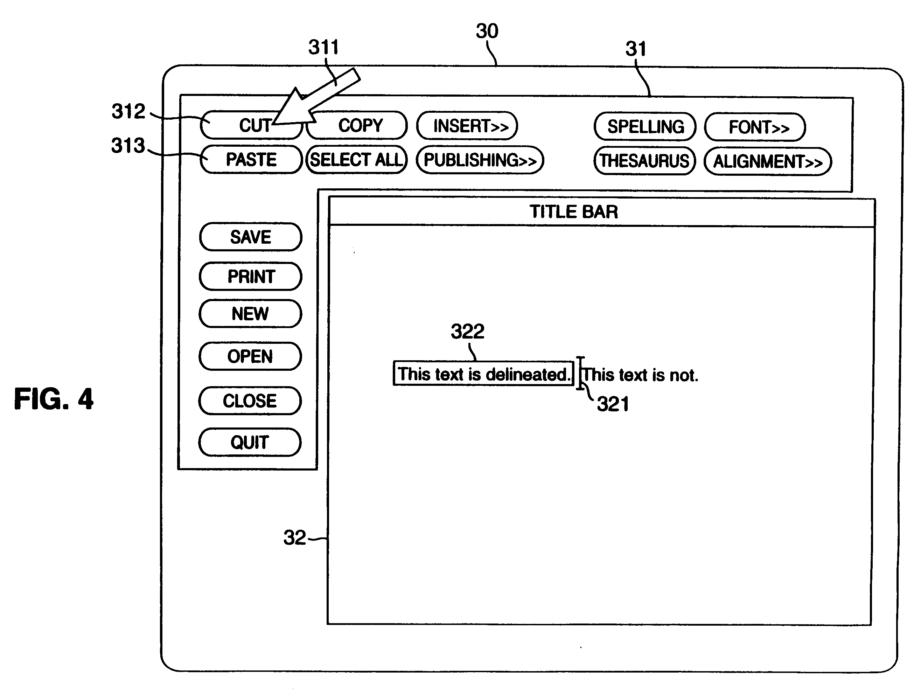

Fig. 4 depicts a screen display 30 of a typical application program controlled by a mouse and trackball combination as contemplated by the invention. The screen display 30 contains a work area 32, including text such as delineated text 322, and a work area cursor 321. The screen display 30 also contains a menu area 31, including a menu selection cursor 311, and menu selections such as the "cut" command 312 and the "paste" command 313.

In the embodiment of the invention illustrated in Fig. 4, an operator uses the mouse 10 to control the execution of a program, such as a word processing program. Movement of the mouse using the arm and wrist changes the location of the position sensor 101 shown in Fig. 2. This in turn controls the movement of the cursor 321 in the program work area 32. Stroking the trackball 201, shown in Fig. 3, with the thumb moves the cursor 311, which is used to make selections in the menu selection area 31, such as "cut" 312, "paste" 313 and the like. Thus, control of the two functions in the word processing program, work area functions 32 and menu selection functions 31, are effectively decoupled through the use of the multidimensional mouse.

In this embodiment of the invention, it is not necessary to determine yaw 120 as shown in Fig. 2, so the second mouse position sensor 102 may optionally be eliminated.

A word processing text "cut and paste" operation illustrates the operation of the mouse in this manner. An operator first delineates the text 322 to be moved by moving the work area cursor 321 using his arm and wrist to move the mouse. In this way, the operator moves the cursor to the beginning and ending locations of the text 322, marking these positions with the mouse button 202. Using his thumb to stroke the trackball 201 or the stroke sensor surface, the operator then moves the menu area cursor 311 in the menu selection area 31 near the border of the screen, selecting the "cut" command 312. Because only the thumb is used during the menu selection process, the work area cursor 321, which is controlled by the position of the mouse on the work surface, is left undisturbed, preserving its location for subsequent operations. The "cut" command 312 is actuated by pressing a button preferably located under the tip of the second finger 224.

The operator next indicates the new target location for the delineated text 322. This operation is facilitated by the fact that during the menu selection process, the cursor 321 remained where the operator left it, making it unnecessary for the operator to find his place in the text. The target location for the delineated text is indicated by moving the work area cursor 321 to the new location and again pressing the mouse button 202. Finally, the operator uses his thumb to move cursor 311 down to select the "paste" command 313, and completes the process by actuating this command with the button located under the tip of the second finger 224. This menu selection process is also facilitated because the menu cursor 311, which was last used to select the "cut" command 312, has remained in the same part of the menu area, ready to make the "paste" selection and actuation.

Separating the operation of the work area cursor 321 from the menu selection cursor 311 avoids the relatively long and repetitive mouse moves previously required to reposition the cursor from the work area 32 to the menu selection area 31 and back. A substantial reduction in operator fatigue results.

The described mouse can also be used advantageously in many other applications, including, for example, spreadsheet applications. In such applications, an operator uses movement of the mouse to move the work area cursor from cell to cell, in order to indicate blocks of data upon which to operate. The thumb operated menu cursor is then used to select the operation to be performed, for example, moving a block of cells, adding a column of cells, or copying a cell to a group of cells. As with word processing, the use of the improved mouse facilitates the tasks to be performed by eliminating the need to move the mouse between the work area and the menu selection area.

The improved mouse can also advantageously be used in conjunction with a CAD application program. Five finely controlled, independent mouse coordinates are available to control five axes in a drawing application. For example, in one embodiment of the invention, mouse movement on a tablet controls the x and y coordinates in the plane of the display screen as well as the yaw angle in this plane. The thumb actuated track ball controls pitch and roll, which are rotations about the x and y coordinates, respectively. Movement in the third, or z axis into and out of the screen is controlled by actuating the index finger button while stroking the trackball. Control of the drawing cursor is perceived by the operator to be smooth and natural. Users intuitively know how to operate the mouse in this application.

It should be understood that the above-described arrangements of the invention are merely illustrative. Other arrangements may be devised by those skilled in the art which will embody the principles of the invention and fall within the spirit and scope thereof.

## Claims

1. A computer graphic input device comprising:
a housing with a bottom surface, the bottom surface slideably resting on a two dimensional work surface having in a plane of the work surface a first axis and a second axis perpendicular to the first, the housing being suitably adapted to be grasped in a hand with a thumb slideably resting on a side portion of the housing, the side portion of the housing having in a plane of the side portion a third axis and a fourth axis perpendicular to the third;
a sensor for measuring a position of the housing along the first and second axes of the work surface;
a sensor for measuring an angle of the housing in the plane of the work surface;
a sensor for measuring a position of the thumb along the third and fourth axes of the side portion of the housing.

2. The computer graphic input device of claim 1, wherein the sensor for measuring a position of the housing along the first and second axes of the work surface comprises:
a first spherical member rotatably mounted in the housing, the first spherical member protruding from the bottom surface of the housing and contacting the work surface such that the first spherical member rolls on the work surface when the housing slides on the work surface;
a first pair of rotary sensor means mounted in the housing, the first pair of rotary sensor means being in rolling contact with the first spherical member so as to make measurements of the rolling movement of the first spherical member along the first and second axes of the work surface;
a second spherical member rotatably mounted in the housing, the second spherical member protruding from the bottom surface of the housing and contacting the work surface such that the second spherical member rolls on the work surface when the housing slides on the work surface;
a second pair of rotary sensor means mounted in the housing, the second pair of rotary sensor means being in rolling contact with the second spherical member so as to make measurements of the rolling movement of the second spherical member along the first and second axes of the work surface;
means for averaging the measurements of the rolling movements along the first axis of the first spherical member and the second spherical member;
means for averaging the measurements of the rolling movements along the second axis of the first spherical member and the second spherical member.

3. The computer graphic input device of claim 2, wherein the sensor for measuring an angle of the housing in the plane of the work surface comprises:
means for calculating a difference between the measurements of the rolling movements along the first axis of the first spherical member and the second spherical member;
means for calculating the inverse sine of a quotient of the difference divided by a distance from a center of the first spherical member to a center of the second spherical member.

4. The computer graphic input device of claim 1, wherein the sensor for measuring a position of the housing along the first and second axes of the work surface comprises:
a first housing electrode embedded in the bottom surface of the housing;
a second housing electrode embedded in the bottom surface of the housing;
a tablet in the work surface having electrode segments in the directions of the first axis and the second axis, the tablet being capacitively coupled to the housing electrodes so that a centroid of capacitances of the electrode segments with each of the first and second housing electrodes can be determined in the direction of each of the first and second axes;
means for averaging the centroids of the capacitances in the direction of the first axis corresponding to each of the first and second housing electrodes;
means for averaging the centroids of the capacitances in the direction of the second axis corresponding to each of the first and second housing electrodes.

5. The computer graphic input device of claim 4, wherein the sensor for measuring the angle of the housing in the plane of the work surface comprises:
means for calculating a difference between the measurements of the capacitance centroids in the direction of the first axis of the first and second housing electrodes;
means for calculating the inverse sine of a quotient of the difference divided by a distance from a center of the first housing electrode to a center of the second housing electrode.

6. The computer graphic input device of claim 1, wherein the sensor for measuring the position of the thumb along the third and fourth axes of the side portion of the housing comprises:
a spherical member rotatably mounted in the housing, the spherical member protruding from the side portion of the housing such that the thumb contacts the spherical member when the housing is grasped, the spherical member rolling in the housing when the thumb' is stroked on the spherical member;
a pair of rotary sensor means mounted in the housing, the pair of rotary sensor means being in rolling contact with the spherical member so as to make measurements of the rolling movement of the spherical member along the third and fourth axes of the side portion of the housing.

7. The computer graphic input device of claim 1, wherein the sensor for measuring the position of the thumb along the third and fourth axes of the side portion of the housing comprises a stroke sensing surface having tiles embedded therein for measuring a capacitance between each of the tiles and the thumb whereby a centroid of the capacitances is calculated in order to determine a thumb position.

8. A method of introducing data into a computer application program comprising:
making selections by moving a first cursor using a first cursor control means;
making selections by moving a second cursor using a second cursor control means, the second cursor control means being independently operable from the first.

9. The method of claim 8, wherein the first cursor control means comprises:
a work surface having a first and a second axis in a plane of the work surface;
a housing with a bottom surface slideably resting on the work surface;
a spherical member rotatably mounted in the housing, the spherical member protruding from the bottom surface of the housing and contacting the work surface such that the spherical member rolls on the work surface when the housing slides on the work surface;
a pair of rotary sensor means mounted in the housing, the pair of rotary sensor means being in rolling contact with the spherical member so as to make measurements of the rolling movement of the spherical member along the first and second axes of the work surface.

10. The method of claim 8, wherein the first cursor control means comprises:
a work surface having a first and a second axis in a plane of the work surface;
a housing with a bottom surface slideably resting on the work surface;
a housing electrode embedded in the bottom surface of the housing;
a tablet in the work surface having electrode segments in the directions of the first axis and the second axis, the tablet being capacitively coupled to the housing electrode so that a centroid of capacitances of the electrode segments with the housing electrode can be determined in the direction of each of the first and second axes.

11. The method of claim 8, wherein the second cursor control means comprises:
a housing with a side portion for slideably resting a thumb, the side portion having in a plane of the side portion a first axis and a second axis perpendicular to the first;
a spherical member rotatably mounted in the housing, the spherical member protruding from the side portion of the housing such that the thumb contacts the spherical member, the spherical member rolling in the housing when the thumb is stroked on the spherical member;
a pair of rotary sensor means mounted in the housing, the pair of rotary sensor means being in rolling contact with the spherical member so as to make measurements of the rolling movement of the spherical member along the first and second axes of the side portion of the housing.

12. The method of claim 8, wherein the second cursor control means comprises:
a housing with a side portion for slideably resting a thumb, the side portion having in a plane of the side portion a first axis and a second axis perpendicular to the first;
a stroke sensing surface on the side portion of the housing having tiles embedded therein for measuring a capacitance between each of the tiles and the thumb whereby a centroid of the capacitances is calculated in order to determine a thumb position.

13. The method of claim 8, wherein the application program is a word processing program, the first cursor is a text work area cursor, and the second cursor is a menu selection cursor.

14. The method of claim 8, wherein the application program is a spreadsheet program, the first cursor is a data cell selection cursor, and the second cursor is a menu selection cursor.

15. A device for independently controlling a first and a second coordinate system with one hand, comprising:
a housing slideably resting on a work surface, the position of the housing on the work surface controlling the first coordinate system, the housing configured to be grasped in a hand with the palm of the hand being angled to the work surface with an index finger being higher than a little finger;
a side portion of the housing for resting a thumb, whereby the position of the thumb on the side portion controls the second coordinate system.

16. The device of claim 15, wherein the first coordinate system is a location of a first cursor in a first screen area of an application program and the second coordinate system is a location of a second cursor in a second screen area of the application program.

17. The device of claim 15, wherein a top of the housing is rounded to conform to the index finger in a relaxed position.

18. The device of claim 17, wherein a button is provided under a tip of the index finger.

19. The device of claim 17, wherein a button is provided under a tip of a second finger.

20. The device of claim 17, wherein the housing is configured to be grasped with lower links of the index finger, a second finger, a ring finger, and a base of the thumb.
